Europäisches Patentamt

European Patent Office

Office européen des brevets

(19)

(11) Veröffentlichungsnummer : **0 152 087**
**B1**

(12)

# EUROPÄISCHE PATENTSCHRIFT

(45) Veröffentlichungstag der Patentschrift :
23.03.88

(21) Anmeldenummer : 85101419.1

(22) Anmeldetag : 11.02.85

(51) Int. Cl.⁴ : **C 08 L 93/04**, D 21 H 3/34 //
(C08L93/04, 33:26)

(54) **Mischungen von wasserlöslichen synthetischen organischen Polymeren mit Naturharzleimen und ihre Verwendung als Leimungsmittel.**

(30) Priorität : 13.02.84 DE 3405019

(43) Veröffentlichungstag der Anmeldung :
21.08.85 Patentblatt 85/34

(45) Bekanntmachung des Hinweises auf die Patenterteilung : 23.03.88 Patentblatt 88/12

(84) Benannte Vertragsstaaten :
AT BE CH DE FR IT LI NL SE

(56) Entgegenhaltungen :
DE-A- 2 016 792
DE-B- 1 090 079
DE-C-   663 445
GB-A- 1 178 056
JP-A-78 027 649
US-A- 4 328 141
ABSTRACT BULLETIN OF THE INSTITUTE OF PAPER
CHEMISTRY, Band 53, Nr. 9, März 1983, Seite 1070,
Nr. 9947, Appleton, Wisconsin, US; & JP - A - 78 27 649
(ARAKAWA CHEMICAL INDUSTRY LTD.) 15.03.1978

(73) Patentinhaber : Chemische Fabrik Stockhausen
GmbH
Bäkerpfad 25
D-4150 Krefeld (DE)

(72) Erfinder : Peppmöller, Reinmar, Dr. Dipl.-Chem.
Kemmerhofstrasse 189
D-4150 Krefeld (DE)
Erfinder : Koschier, Friedlieb, Dipl.-Ing.
Zu der Kummel 11
D-6751 Sippersfeld (DE)

(74) Vertreter : Klöpsch, Gerald, Dr.-Ing.
An Gross St. Martin 6
D-5000 Köln 1 (DE)

EP 0 152 087 B1

## Beschreibung

Gegenstand der vorliegenden Erfindungen sind Mischungen aus wasserlöslichen verseiften (Meth)acrylpolymerisaten und Harzleimprodukten auf der Basis von zumindest teilweise verseiften, verstärkten oder unverstärkten Naturharzen und ihre Verwendung als Leimungsmittel für die Papier- und Kartonherstellung.

Auf vielen Gebieten der Technik (zu nennen sind beispielsweise die Seifenherstellung, die Herstellung von Putz- und Polierpräparaten, die Betonherstellung, die Papierindustrie) finden seit langer Zeit Verseifungsprodukte von Naturharzen, sogenannte Harzleime, Anwendung. Insbesondere in der Papierindustrie ist es üblich, Papiere und Kartons mit Leimungsmitteln, die in die Stoffmasse gegeben werden auszurüsten um die natürliche Eigenschaft aller Papierstoffe, wässrige Flüssigkeiten kapillar aufzunehmen, zu verringern. Die Verringerung der natürlichen Saugfähigkeit von Papieren und Kartons ist vor allen Dingen dann zu verlangen, wenn die auf ihrer Oberfläche aufgebrachten hydrophilen Druckfarben bzw. Tinte usw. in scharf umrissener Form erhalten bleiben sollen. Wie erwähnt, erreicht man den gewünschten Grad an Widerstandsfähigkeit gegen das Eindringen von hydrophiler Flüssigkeiten durch das Leimen des Papiers. Zur Herstellung geeigneter Leimungsstoffe geht man im allgemeinen auch heute noch von Naturharzen oder Naturwachsen aus, die ganz oder teilweise verseift werden und, in Wasser gelöst oder dispergiert, der Papierstoffmasse, die gegebenenfalls Füllstoffe, Retentionsmittel und andere Zusätze enthält, zugemischt werden. Im Regelfall verwendet man als Ausgangsmaterial ein Naturharz, das zum Beispiel ein Balsamharz, Wurzelharz, Tallharz oder ähnliches sein kann und behandelt dies mit Alkali, wie Natronlauge (DE-OS 14 67 559).

Man verseift entweder das ganze Harz (vollkommene Verseifung) oder nur einen Teil, so daß noch « freies » Harz im Harzleim (sogenannter Freiharzleim) enthalten ist. Der Verseifungsgrad der Harzleime bestimmt deren Wasserlöslichkeit. Bei vollkommener Verseifung des Harzes werden klare Harzseifenlösungen erhalten. Unvollständige Verseifung der Harze ergibt Dispersionen mit hohem Anteil an « Freiharz ».

Die durch Behandlung mit Alkali erhaltenen Harzleime sind anionisch und werden in der Regel mit Aluminiumsalzen, meist Aluminiumsulfat oder Alaun, in der Papierstoffmasse gefällt und fixiert. Die in das Papiergefüge eingebetteten Leimpartikel haben eine wasserabstossende Wirkung und vermindern daher die Benetzbarkeit und Saugfähigkeit des Papiererzeugnisses. Mit zunehmender Harzleimmenge nimmt jedoch die mechanische Festigkeit des geleimten Produkts durch zunehmende Verringerung der Zwischenfaserbindungen ab.

Als Freiharzleim zum Leimen von Papieren und Kartons sind wässrige Dispersionen von Kolophoniumharzen üblich, die nur teilweise mit einer Base, bevorzugt mit Natrium- oder Kaliumhydroxid verseift worden sind. Häufig wird diesen Produkten ein Schutzkolloid, zum Beispiel Casein als Stabilisator zugegeben.

Solche freiharzreichen Naturharzdispersionen, die nach ihrem Herstellungsverfahren auch als Bewoid-Leime bekannt sind, zeichnen sich gegenüber den vollverseiften Harzleimen durch eine Wirksamkeitsverbesserung aus.

Ebenso ist es seit längerem bekannt, durch Umsetzung von Naturharzen mit Formaldehyd und/oder $\alpha,\beta$-ungesättigten Carbonsäuren oder ihren Anhydriden « verstärkte » Kolophoniumharze zu gewinnen, die wirksamere vollverseifte Harzleime oder freiharzhaltige Dispersionen vom Bewoidtyp ergeben.

Ausgehend von diesem Stand der Technik ist es die Aufgabe der Erfindung, ein in seiner Leimungswirkung wesentlich verbessertes Produkt bereitzustellen, das zum einen bei geringeren Anwendungskonzentrationen die gewünschte Verringerung der kapillaren Saugwirkung des Papiers erzielt und zum anderen dem geleimten Papier bzw. Karton eine erhöhte mechanische Festigkeit verleiht.

Diese Aufgabe wird erfindungsgemäß durch Bereitstellung einer Mischung gelöst, die

a) wenigstens ein synthetisches, anionisches wasserlösliches Polymerisat, enthaltend mindestens 80 % Gew.-% Acrylamid und/oder Methacrylamid (Komponente A) und

b) wenigstens ein Leimungsmittel auf Basis eines vollverseiften Naturharzes (Komponente B) und/oder wenigstens ein Leimungsmittel auf Basis eines teilverseiften Naturharzes (Komponente C) enthält.

Die Komponente A kann aus einer oder mehreren wasserlöslichen Polymersäure(n) und/oder wenigstens einem wasserlöslichen Polymersalz bestehen, wobei insbesondere wasserlösliche Alkali- und/oder Ammoniumsalze in Frage kommen. Sie können ganz oder teilweise als wasserlösliches Salz eingesetzt werden.

Geeignete Polymere für Komponente A sind teilverseiftes Polyacrylamid, teilverseiftes Methacrylamid, Copolymerisate von Acrylsäure und/oder Methacrylsäure mit Methacrylamid, Acrylnitril, Methacrylnitril, Vinylacetat, Maleinsäureanhydrid, Diisobutan, Ethylacetat und/oder Methacrylat oder aus Gemischen dieser Polymeren, die vorzugsweise in Form ihrer wasserlöslichen Alkali- und/oder Ammoniumsalze eingesetzt werden. Diese Polymerisate werden zum Beispiel nach den bekannten Verfahren gemäß US-PS 28 19 189 und US-PS 29 99 038 aus den entsprechenden Monomeren hergestellt. Die Ausführung der Polymerisation erfolgt vorzugsweise in Wasser in Gegenwart von Radikalbildnern als Polymerisationskatalysatoren. Es können sowohl die monomeren Säuren als auch die monomeren Salze zur Polymerisation

2

eingesetzt werden. Eine bevorzugte Verfahrensform für die Herstellung der Bestandteile von Komponente A besteht darin, daß während der Polymerisation der Monomeren zu den Polymeren der Komponente A der pH-Wert unter 7 belassen wird. Eine Anhebung des pH-Wertes erfolgt dann erst bei Zugabe zur Komponente B und/oder C während der Fertigstellung der erfindungsgemäßen Mischung.

Es ist ebenso möglich, die bei der Fällungspolymerisation oder Lösungspolymerisation erhaltenen Produkte zu isolieren. Nach Trocknung wird dann das erhaltene Pulver oder Granulat als Komponente A der erfindungsgemäßen Mischung verwendet.

Die Polymerisate der Komponente A sollen mindestens 80 Gew.-%, vorzugsweise mindestens 90 Gew.-% Acrylamid und/oder Methacrylamid, 0 bis 5 Gew.-% Acrylnitril, Methacrylnitril, Vinylacetat, Maleinsäureanhydrid, Diisobuten, (Meth)Acrylsäureester von einwertigen primären Alkoholen mit 1 bis 4 C-Atomen und 5 bis 20 Gew.-% Acrylsäure und/oder Methacrylsäure enthalten. Sie werden bevorzugt als Alkali- und/oder Ammoniumsalze eingesetzt.

Die Viskosität in der 2%igen wässrigen Lösung der Polymerisate von Komponente A sollten bei 20 °C zwischen 5 und 100 mPa.s, vorzugsweise zwischen 20 und 70 mPa.s (Brookfield RV 20 min$^{-1}$, Messkörper I) liegen.

Als Komponente B eignen sich vor allem vollverseifte, bevorzugt verstärkte Harzleime, die aus Naturharzkolophonium, wie zum Beispiel Tallölkolophonium, gewonnen worden sind. Kombinationen von Komponente A mit freiharzhaltigen Dispersionen (Komponente C), die z.B. aus teilverseiftens Naturharzkolophonium, bevorzugt Tallölkolophonium, gewonnen worden sind, deren pH-Wert üblicherweise zwischen 6 und 7 liegt, sind gut verträglich. Zum Abmischen mit vollverseiften verstärkten Harzleimen (Komponente B) mit einem pH-Wert von 11 bis 12 sollten vorzugsweise als Komponente A Polymerisate verwendet werden, deren Carboxylgehalt mehr als 4 mMol pro Gramm beträgt, um ein ggf. auftretendes Ausfällen zu verhindern.

Eine typische erfindungsgemäße Mischung unter Verwendung eines vollverseiften Harzleims setzt sich wie folgt zusammen :

3 bis 50 Gew.-%, vorzugsweise 5 bis 25 Gew.-% Komponente A
50 bis 97 Gew.-%, vorzugsweise 75 bis 95 Gew.-% Komponente B

Die Gewichtsprozentangaben beziehen sich auf die Trockensubstanz der Komponenten.

Die Komponenten A und B können sowohl als Pulver als auch als wässrige Lösung dem oben angegebenen Verhältnis entsprechend miteinander gemischt werden. Da das Polymersalz die Viskosität der wässrigen Lösung stärker erhöht, als vergleichbare Mengen der Harzseife, weisen giessfähige, hochprozentige Lösungen einen Überschuß der Komponente B (vollverseifter Harzleim) auf.

Für ein Leimungsmittel vom Harzseifentyp, das zum Beispiel aus 3 Gewichtsteilen Harzleim und 1 Gewichtsteil Polymersalz zusammengesetzt ist, werden zur Verflüssigung 16 Gewichtsteile Wasser benötigt, so dass eine 20 %ige Lösung resultiert.

Auch bei Dispersionsharzleimen vom Bewoidtyp (Komponente C) sollte auf Trockensubstanz der Komponenten bezogen, ein Mischungsverhältnis von

3 bis 50 Gew.-% Komponente A und
50 bis 97 Gew.-% Komponente C

eingehalten werden. Dem flüssigen Leimungsmittel können weitere Stoffe, wie Konservierungsmittel, Farb- und Geruchstoffe, Feuchthaltemittel sowie Schutzkolloide zugemischt werden. Vorzugsweise werden die erfindungsgemäßen Mischungen als 20 bis 70 %ige wässrige Lösungen für die Leimung eingesetzt.

Üblicherweise werden die erfindungsgemäßen Mischungen beim Einsatz in der Papier- und Kartonherstellung in die Maschinenbütte zu der Faserstoffsuspension gegeben. Der Zusatz kann aber auch nach der mechanischen Mahlung der Faserstoffe oder im Dünnstoffbereich zwischen Maschinenbütte und Stoffauflauf der Papiermaschine erfolgen. Von entscheidender Bedeutung für die Fixierung des Leimungsmittels im Papiergefüge ist der pH-Wert der Faserstoffsuspension, der mit Aluminiumsulfat auf 4,3 bis 4,6 eingestellt wird.

Während bei konventionellen Harzleimen mit zunehmender Anwendungskonzentration der Leimungsgrad des Papieres zwar zunimmt, die Trockenfestigkeit jedoch vermindert wird, bewirken die erfindungsgemäßen Mischungen neben wirksamerer Leimung eine Zunahme der Papierfestigkeit. Die gleichzeitig erfolgende Fixierung der Polymerkomponente A und der Leimungskomponente B bzw. C mit Aluminiumsalzen (Alaun) bei den erfindungsgemäßen Mischungen ermöglicht eine verbesserte Nutzung der leimungswirksamen Trockensubstanz von voll- bzw. teilverseiften Harzleimen. Bei gefüllten Papieren rufen die erfindungsgemäßen Mischungen eine gesteigerte Füllstoffretention hervor. Die prozentuale Steigerung des Leimungsgrades und der Trockenfestigkeit hängt ab von der Art des Faserstoffs, dem Mahlgrad und den sonstigen Zuschlägen wie Clay, Kaolin, Kreide, Titandioxid und von der Gegenwart anderer Papierhilfsmittel.

Die Anwendungskonzentration der erfindungsgemäßen Mischungen — auf Trockensubstanz bezogen — wird wie bei konventionellen Harzleimen nach dem gewünschten Leimungsgrad gewählt und liegt

3

maximal bei etwa 4 Gew.-% des Papiergewichts.

Besondere Vorteile bietet die erfindungsgemäße Mischung, die einen anionischen Ladungscharakter aufweist, wenn teilweise anstelle der üblicherweise als Fällungsmittel verwendeten Aluminiumsalze wie Aluminiumsulfat oder Alaun, kationische Polymerisate mittlerer Molmasse eingesetzt werden. Zweckmäßig werden kationisierte Copolymerisate des Acrylamids mit Dialkylaminoacrylaten mit 1 bis 4 C-Atomen im Alkoholatrest oder entsprechenden Methacrylaten, ferner auch mit Mannichprodukten erzielt, wie sie durch Umsetzung von Polyacrylamid mit Formaldehyd und Dialkylaminen erhältlich sind. Die Anwendung der erfindungsgemäßen Mischung in Gegenwart eines kationischen Polymerisats führt dazu, daß die prozentualen Steigerungen der Trockenfestigkeit und des Leimungsgrades beim Papierstoff noch etwas höher ausfallen als bei Anwendung der erfindungsgemäßen Mischung mit Aluminiumsalzen allein. Beachtenswert ist die Tatsache, daß auch die Reihenfolge der Produktzugabe auf das Ergebnis einen entscheidenden Einfluß haben kann. So kann eine Papierstoffsuspension, die bereits ein kationisches Polymerisat enthält, bei Zusatz der erfindungsgemäßen Mischung zu einem Papier mit ausgeprägter Trockenfestigkeit führen ; umgekehrt eine Papierstoffsuspension, in die zuerst das Leimungsmittel eindosiert wurde, ein Papier mit höherem Leimungsgrad erwarten lassen.

Die Erfindung wird durch die folgenden Beispiele erläutert :

### Beispiel 1

Es wurden 10 g Acrylsäure und 2 g Methacrylsäure mit 86 g Acrylamid und 2 g Acrylnitril in 899 g Wasser, das 1 g Natronlauge (45 %) enthielt, nach bekanntem Verfahren mit $K_2S_2O_8$ als Katalysator polymerisiert. Anschliessend wurde das Polymerisat mit Natronlauge auf pH-Wert 5 bis 6 eingestellt (A1). Die Viskosität der 2 Gew.-%igen, mit Natronlauge auf pH-Wert 9 eingestellten Lösung betrug 53 mPa.s (Brookfiels MK I/20).

Zur Herstellung der erfindungsgemäßen Mischung wurden 60 Gewichtsteile Komponente B (vollverseifter, chemisch verstärkter Harzleim mit 50 % Feststoffgehalt) mit 100 Gewichtsteilen Komponente A (A1) unter Rühren gemischt. Unter Rühren wurden weitere 40 Gewichtsteile destilliertes Wasser hinzugefügt.

Die Mischung stellt eine schwach viskose, braune klare Lösung dar, die lagerbeständig ist und wie ein handelsüblicher Harzleim verwendet werden kann. Die Mischung enthält 20 Gew.-% Trockensubstanz ; das Wirkstoffverhältnis von Komponente B/Komponente A (A1) ist 75/25 %.

### Beispiel 1a

Es wurden 10 g Acrylsäure und 2 g Methacrylsäure mit 86 g Acrylamid und 2 g Acrylnitril in 899 g Wasser, das 1 g Natronlauge (45 %) enthielt, nach bekanntem Verfahren mit $K_2S_2O_8$ als Katalysator polymerisiert. Anschliessend wurde das Polymerisat mit Natronlauge auf pH-Wert 5 bis 6 eingestellt (A1a). Die Viskosität der 2 Gew.-%igen, mit Natronlauge auf pH-Wert 9 eingestellten Lösung betrug 53 mPa.s (Brookfield MK I/20).

Zur Herstellung der erfindungsgemäßen Mischung wurden 83,7 Gewichtsteile Komponente B (vollverseifter, chemisch verstärkter Harzleim mit 50 % Feststoffgehalt) mit 46,5 Gewichtsteilen Komponente A (A1a) unter Rühren gemischt. Unter Rühren wurden weitere 69,8 Gewichtsteile destilliertes Wasser hinzugefügt.

Die Mischung stellt eine schwach viskose, braune klare Lösung dar, die lagerbeständig ist und wie ein handelsüblicher Harzleim verwendet werden kann.

Die Mischung enthält 23,3 Gew.-% Trockensubstanz ; das Wirkstoffverhältnis von Komponente B/Komponente A (A1) ist 90/10 %.

### Beispiel 1b

Es wurden 10 g Acrylsäure und 2 g Methacrylsäure mit 86 g Acrylamid und 2 g Acrylnitril in 899 g Wasser, das 1 g Natronlauge (45 %) enthielt, nach bekanntem Verfahren mit $K_2S_2O_8$ als Katalysator polymerisiert. Anschliessend wurde das Polymerisat mit Natronlauge auf pH-Wert 5 bis 6 eingestellt (A1b). Die Viskosität der 2 Gew.-%igen, mit Natronlauge auf pH-Wert 9 eingestellten Lösung betrug 53 mPa.s (Brookfield MK I/20).

Zur Herstellung der erfindungsgemäßen Mischung wurden 86,4 Gewichtsteile Komponente B (vollverseifter, chemisch verstärkter Harzleim mit 50 % Feststoffgehalt) mit 22,7 Gewichtsteilen Komponente A (A1b) unter Rühren gemischt. Unter Rühren wurden weitere 90,9 Gewichtsteile destilliertes Wasser hinzugefügt.

Die Mischung stellt eine schwach viskose, braune klare Lösung dar, die lagerbeständig ist und wie ein handelsüblicher Harzleim verwendet werden kann. Die Mischung enthält 22,7 Gew.-% Trockensubstanz ; das Wirkstoffverhältnis von Komponente B/Komponente A (A1) ist 95/5 %.

### Beispiel 2

10 g Acrylsäure und 2 g Maleinsäureanhydrid wurden mit 86 g Acrylamid und 2 g Methacrylat wie in Beispiel 1 in Gegenwart von $K_2S_2O_8$ und Natronlauge zu einem Copolymerisat in wässriger Lösung umgesetzt und auf pH = 5 bis 6 teilneutralisiert. Die Viskosität der 2 Gew.-%igen Lösung des Polymerisats (A2) betrug 31 mPa.s (Brookfield MK I/5) Upm ; pH = 9). Die Trockensubstanz der Polymerlösung wurde auf 10 % eingestellt. Zur Herstellung einer Mischung gemäß der Erfindung wurden 60 Gewichtsteile Komponente B (vollverseifter, chemisch verstärkter Harzleim) mit 100 Gewichtsteilen Komponente A (A2) gemischt. Dieser Mischung wurden unter weiterem Rühren 40 Gewichtsteile destilliertes Wasser hinzugefügt.

Das erhaltene Leimungsmittel ist eine leicht viskose, braune, klare Lösung von guter Lagerbeständigkeit und kann wie ein handelsüblicher Harzleim verwendet werden. Die Trockensubstanz der Mischung beträgt 20 Gew.-% bei einem Verhältnis von Komponente B/Komponente A (A2) von 75/25 %.

## Beispiel 3

Für die Mischung wurde das gemäß Beispiel 1 hergestellte Polymerisat (A1) herangezogen. Als Komponente C wurde ein handelsüblicher Dispersionsharzleim (teilverseifte, aus verstärktem Tallharzkolophonium hergestellte Harzdispersion) ausgewählt. Der Feststoffgehalt dieser Dispersion beträgt 30 Gew.-%.

Zur Herstellung der Mischung wurden 50 Gewichtsteile des Polymerisats (A1) unter Rühren mit 50 Gewichtsteilen Komponente C gemischt. In diesem Fall erfolgte kein Wasserzusatz. Die Mischung stellt eine mittelviskose Dispersion dar, die bei sehr guter Lagerbeständigkeit wie ein handelsüblicher Bewoid-Harzleim verwendet werden kann. Die Mischung enthält 20 Gew.-% Trockensubstanz. Das Wirkstoffverhältnis von Komponente C/Komponente A (A1) liegt bei 75/25 %.

## Beispiel 3a

Für die Mischung wurde das gemäß Beispiel 1 hergestellte Polymerisat (A1) herangezogen. Als Komponente C wurde ein handelsüblicher Dispersionsharzleim (teilverseifte, aus verstärktem Tallharzkolophonium hergestellte Harzdispersion) ausgewählt. Der Feststoffgehalt dieser Dispersion beträgt 30 Gew.-%.

Zur Herstellung der Mischung wurden 25 Gewichtsteile des Polymerisats (A1) unter Rühren mit 75 Gewichtsteilen Komponente C gemischt. In diesem Fall erfolgte kein Wasserzusatz. Die Mischung stellt eine mittelviskose Dispersion dar, die bei sehr guter Lagerbeständigkeit wie ein handelsüblicher Bewoid-Harzleim verwendet werden kann. Die Mischung enthält 25 Gew.-% Trockensubstanz. Das Wirkstoffverhältnis von Komponente C/Komponente A (A1) liegt bei 90/10 %.

Wirksamkeitsprüfung der Leimungsmittel

Zur Prüfung der Leimungsmittel auf ihre Wirksamkeit im Vergleich zu konventionellen Harzleimen wurden gemäß der Einheitsmethode nach Merkblatt 108 des Vereins Zellcheming Prüfblätter auf dem RK-Blattbildner hergestellt. Die Prüfblätter wurden sowohl auf ihren Leimungsgrad als auch auf ihre Trockenfestigkeit getestet.

Zur Leimungsgradprüfung wurde ein Prüfgerät (System Cobb) verwendet, welches bei 10 cm² Prüffläche auch Leimungstests an RK-Blättern ermöglicht. Als geeignete Prüfmethode zur Bestimmung der Trockenfestigkeit des Blattgefüges wurde die Messung des Berstwiderstandes mit dem Mullen-Tester herangezogen.

Zur Erzielung von Prüfblättern mit möglichst homogener Formation und minimaler Streuung ihrer Eigenschaften wurde ein auf verschiedene Mahlgrade im Vally-Holländer gemahlener Buchensulfitzellstoff (gebleicht) verwendet. Die Flächenmasse der Prüfblätter betrug in allen Fällen 100 g/m².

Die Fixierung der Leimungsmittel erfolgt einheitlich durch Zugabe von 3 Gew.-% Aluminiumsulfat zum Stoffbrei. Alle Dosierungen der Leimungsmittel in den nachfolgenden Anwendungsfällen sind auf die Menge an Harzleimtrockensubstanz bezogen, die dem atro Papierstoff zugefügt worden ist. Als Füllstoff wurde Chinaclay verwendet. Jeder der in den Tabellen angegebenen Prüfwerte ist das arithmetische Mittel aus 5 Einzelmessungen.

Die Wirksamkeit der erfindungsgemäßen Mischungen im Vergleich zu konventionellen Harzleimen wird anhand der folgenden Anwendungsfälle näher erläutert :

| | |
|---|---|
| Anwendungsfall 1 : | Papierstoff aus gemahlenem gebleichtem Laubholzzellstoff ohne Füllstoff ; Mahlgrad : 22 °SR |
| I konventionelles Leimungsmittel | vollverseifter, chemisch verter Harzleim (B) gemäß Beispiel 1 |
| II erfindungsgemäße Mischung : | Kombination des Harzleims B) mit dem Polymerisat (A1) gemäß Beispiel 1 |
| Aluminiumsulfatzusatz : | 3 Gew.-%/atro Papier |

| Dosierung auf Harztrockensubstanz bezogen | Berstwiderstand (Mullen-Test) | | | | Leimungseffekt (Cobb-Test) | |
|---|---|---|---|---|---|---|
| | ( $N/cm^2$ ) | Diff. (%) | ( $N/cm^2$ ) | Diff. (%) | ( $g/m^2$ ) | |
| Leimungsmittel | I | | II | | I | II |
| 0,0 % | 15,0 | – | 15,0 | – | 200 | 200 |
| 0,25 % | 15,0 | ± 0,0 | 17,1 | +14,0 | 105 | 55 |
| 0,50 % | 15,0 | ± 0,0 | 17,9 | +19,3 | 63 | 38 |
| 0,75 % | 15,0 | ± 0,0 | 18,8 | +28,8 | 35 | 23 |
| 1,00 % | 14,6 | – 2,7 | 19,2 | +31,5 | 25 | 19 |
| 1,25 % | 14,8 | – 1,3 | 21,0 | +38,2 | 21 | 18 |
| 1,50 % | 14,4 | – 4,0 | 22,2 | +48,0 | 19 | 17 |

Die Abhängigkeit des Berstwiderstands von den relativen Einsatzmengen von I und II wird durch das folgende Diagramm veranschaulicht :

(Siehe Tabelle Seite 7 f.)

Berstwiderstand Mullen  Leimungseffekt

Differenz (%)  Cobb (g/m²)  Anwendungsfall 1

I Harzleim B
II erfindungsgemäße Mischung

Papierstoff ohne Füllstoff

Harztrockensubstanz

0 152 087

Anwendungsfall 1 a :

I konventionelles Leimungsmittel :

II erfindungsgemäße Mischung :

Aluminiumsulfatzusatz :

Papierstoff auf gemahlenem gebleichtem Laubholzzellstoff ohne Füllstoff ; Mahlgrad : 22°SR vollverseifter, chemisch verstärker Harzleim (B) gemäß Beispiel 1

Kombination des Harzleims (B) mit dem Polymerisat (A 1a) gemäß Beispiel 1 a 3 Gew.-% atro Papier

| Dosierung auf Harz- trocken- substanz bezogen | Berstwiderstand (Mullen-Test) | | | | Leimungseffekt (Cobb-Test) | |
|---|---|---|---|---|---|---|
| | $(N/cm^2)$ | Diff. (%) | $(N/cm^2)$ | Diff. (%) | $(g/m^2)$ | |
| Leimungs- mittel | I | | II | | I | II |
| 0,0 % | 15,2 | - | 15,2 | - | 200 | 200 |
| 0,25 % | 15,1 | - 0,7 | 16,2 | + 6,6 | 115 | 102 |
| 0,50 % | 15,2 | ± 0,0 | 17,8 | +17,1 | 75 | 68 |
| 0,75 % | 14,8 | - 2,6 | 18,1 | +19,1 | 42 | 37 |
| 1,00 % | 14,7 | - 3,3 | 18,4 | +21,0 | 25 | 23 |
| 1,25 % | 14,4 | - 5,3 | 18,5 | +21,7 | 22 | 20 |
| 1,50 % | 14,5 | - 4,6 | 18,6 | +22,4 | 20 | 19 |

Die Abhängigkeit des Berstwiderstands von den relativen Einsatzmengen von I und II wird durch das folgende Diagramm veranschaulicht :

(Siehe Tabelle Seite 9 f.)

Anwendungsfall 1 b :

I konventionelles Leimungsmittel :

II erfindungsgemäße Mischung :

Aluminiumsulfatzusatz :

Papierstoff aus gemahlenem gebleichtem Laubholzzellstoff ohne Füllstoff ;
Mahlgrad : 22°SR
vollverseifter, chemisch verstärkter Harzleim (B) gemäß Beispiel 1
Kombination des Harzleims (B) mit dem Polymerisat (A1b) gemäß Beispiel 1 b
3 Gew.-%/atro Papier

| Dosierung auf Harz-trocken-substanz bezogen | Berstwiderstand (Mullen-Test) | | | | Leimungseffekt (Cobb-Test) | |
|---|---|---|---|---|---|---|
| | $(N/cm^2)$ | Diff. (%) | $(N/cm^2)$ | Diff. (%) | $(g/m^2)$ | |
| Leimungs-mittel | | I | | II | I | II |
| 0,0 % | 15,2 | — | 15,2. | — | 200 | 200 |
| 0,25 % | 15,1 | - 0,7 | 15,4 | + 1,3 | 115 | 97 |
| 0,50 % | 15,2 | ± 0,0 | 15,8 | + 3,9 | 75 | 52 |
| 0,75 % | 14,8 | - 2,6 | 15,9 | + 4,6 | 42 | 35 |
| 1,00 % | 14,7 | - 3,3 | 16,2 | + 6,6 | 25 | 21 |
| 1,25 % | 14,4 | - 5,3 | 16,1 | + 5,9 | 22 | 19 |
| 1,50 % | 14,5 | - 4,6 | 16,2 | + 6,6 | 20 | 18 |

Die Abhängigkeit des Berstwiderstands von den relativen Einsatzmengen von I und II wird durch das folgende Diagramm veranschaulicht :

(Siehe Tabelle Seite 11 f.)

Berstwiderstand Mullen          Leimungseffekt

Differenz
( % )

Cobb
( g /m²)   Anwendungsfall 1

I Harzleim B

II erfindungsgemäße Mischung

Papierstoff ohne Füllstoff

I

II

II

I

0    0,25    0,50    0,75    1,00    1,25    1,50 ( % )   Harztrockensubstanz

0 152 087

Anwendungsfall 2 :

Papierstoff aus gemahlenem gebleichtem Laubholzzellstoff mit 10 % Chinaclay als Füllstoff ; Mahlgrad : 53°SR

I Konventionelles Leimungsmittel :

vollverseifter chemisch verstärkter Harzleim (B) gemäß Beispiel 1

II erfindungsgemäße Mischung :

Kombination des Harzleims (B) mit dem Polymerisat (A 2) gemäß Beispiel 2

Aluminiumsulfatzusatz :

3 Gew.-%/atro Papier

| Dosierung auf Harz-trocken-substanz bezogen | Berstwiderstand (Mullen-Test) | | | | Leimungseffekt (Cobb-Test) | |
|---|---|---|---|---|---|---|
| | $(N/cm^2)$ | Diff. (%) | $(N/cm^2)$ | Diff. (%) | $(g/m^2)$ | |
| Leimungs-mittel | I | | II | | I | II |
| 0,0 % | 21,0 | — | 21,0 | — | 200 | 200 |
| 0,5 % | 20,6 | − 1,9 | 23,3 | + 11,0 | 112 | 54 |
| 1,0 % | 20,3 | − 3,3 | 24,4 | + 16,2 | 52 | 33 |
| 1,5 % | 20,0 | − 4,8 | 25,4 | + 21,0 | 34 | 24 |
| 2,0 % | 20,2 | − 3,8 | 26,5 | + 26,2 | 27 | 21 |
| 2,5 % | 19,2 | − 6,7 | 28,0 | + 33,3 | 23 | 20 |
| 3,0 % | 19,8 | − 5,7 | 29,2 | + 39,1 | 20 | 17 |

Die Abhängigkeit des Berstwiderstands von den relativen Einsatzmengen von I und II wird durch das folgende Diagramm veranschaulicht :

**(Siehe Tabelle Seite 13 f.)**

**0 152 087**

Anwendungsfall 3 :

I konventionelles Leimungsmittel :

II erfindungsgemäße Mischung

Aluminiumsulfatzusatz :

Papierstoff aus gemahlenem gebleichtem Laubholzzellstoff ohne Füllstoff ; Mahlgrad : 22°SR
teilverseiftes chemisch verstärkte Harzdispersion (C) gemäß Beispiel 3
Kombination der Harzdispersion (C) mit dem Polymerisat (A 1) gemäß Beispiel 3
3 Gew.-%/atro Papier

| Dosierung auf Harz- trocken- substanz bezogen | Berstwiderstand (Mullen-Test) | | | | Leimungseffekt (Cobb-Test) | |
|---|---|---|---|---|---|---|
| | $(N/cm^2)$ | Diff. (%) | $(N/cm^2)$ | Diff. (%) | $(g/m^2)$ | |
| Leimungs- mittel | I | | II | | I | II |
| 0,0 % | 15,0 | – | 15,0 | – | 200 | 200 |
| 0,25 % | 15,2 | + 1,3 | 16,8 | + 12,0 | 200 | 66 |
| 0,50 % | 14,9 | – 0,7 | 18,1 | + 20,7 | 115 | 28 |
| 0,75 % | 14,7 | – 2,0 | 18,9 | + 26,0 | 46 | 20 |
| 1,00 % | 14,6 | – 2,7 | 19,3 | + 28,7 | 22 | 19 |
| 1,25 % | 14,6 | – 2,7 | 20,1 | + 34,0 | 20 | 18 |
| 1,50 % | 14,2 | – 5,3 | 20,8 | + 38,7 | 18 | 16 |

Die Abhängigkeit des Berstwiderstands von den relativen Einsatzmengen von I und II wird durch das folgende Diagramm veranschaulicht :

14

Leimungseffekt

Anwendungsfall 3

I Harzdispersion C
II erfindungsgemäße Mischung

Papierstoff ohne Füllstoff

Cobb
$(g/m^2)$

Berstwiderstand Mullen

Differenz
$(\%)$

1,50 $(\%)$ Harztrockensubstanz

Anwendungsfall 3 a :

Papierstoff aus gemahlenem
Laubholzzellstoff ohne Füllstoff ;
Mahlgrad : 22°SR

I konventionelles Leimungsmittel :

teilverseiftes chemisch verstärkte
Harzdispersion (C) gemäß Beispiel 3

II erfindungsgemäße Mischung :

Kombination der Harzdispersion (C) mit dem
Polymerisat (A 1) gemäß Beispiel 3a

Aluminiumsulfatzusatz :

3 Gew.-%/atro Papier

| Dosierung auf Harz-trocken-substanz bezogen | Berstwiderstand (Mullen-Test) | | | | Leimungseffekt (Cobb-Test) | |
|---|---|---|---|---|---|---|
| | ( N/cm$^2$ ) | Diff. (%) | (N/cm$^2$) | Diff. (%) | ( g/m$^2$ ) | |
| Leimungs-mittel | I | | II | | I | II |
| 0,0 % | 15,0 | – | 15,0 | – | 200 | 200 |
| 0,25 % | 15,2 | + 1,3 | 15,6 | + 4,0 | 200 | 125 |
| 0,50 % | 14,9 | – 0,7 | 15,8 | + 5,3 | 115 | 48 |
| 0,75 % | 14,7 | – 2,0 | 16,0 | + 6,7 | 46 | 33 |
| 1,00 % | 14,6 | – 2,7 | 16,1 | + 7,3 | 22 | 20 |
| 1,25 % | 14,6 | – 2,7 | 16,2 | + 0,8 | 20 | 19 |
| 1,50 % | 14,2 | – 5,3 | 16,4 | + 9,3 | 18 | 19 |

Die Abhängigkeit des Berstwiderstands von den relativen Einsatzmengen von I und II wird durch das folgende Diagramm veranschaulicht :

(Siehe Tabelle Seite 17 f.)

Berstwiderstand Mullen

Leimungs effekt

Differenz (%)

Cobb (g/m²)

Anwendungsfall 3a

I Harzdispersion C

II erfindungsgemäße Mischung

100

100

90

90

80

80

70

70

Papierstoff ohne Füllstoff

60

60

50

50

II

40

40

30

30

II

20

20

10

10

II

0

0

I

-10

I

0   0,25   0,50   0,75   1,00   1,25   1,50 (%)  Harztrockensubstanz

0 152 087

**0 152 087**

**Patentansprüche**

1. Mischung aus
   a) wenigstens einem synthetischen anionischen wasserlöslichen Polymerisat, enthaltend mindestens 80 Gew.-% Acrylamid und/oder Methacrylamid (Komponente A),
   b) wenigstens einem Leimungsmittel auf Basis eines vollverseiften Naturharzes (Komponente B) und/oder
   c) wenigstens einem Leimungsmittel auf Basis eines teilverseiften Naturharzes (Komponente C).

2. Mischung nach Anspruch 1, dadurch gekennzeichnet, dass Komponente A ganz oder teilweise als wasserlösliches Salz eingesetzt wird.

3. Mischung nach Anspruch 2, dadurch gekennzeichnet, dass die Salze Alkali- und/oder Ammoniumsalze sind.

4. Mischung nach Ansprüchen 1 bis 3, dadurch gekennzeichnet, dass Komponente A aus teilverseiftem Polyacrylamid, teilverseiftem Methacrylamid, aus einem Copolymerisat von Acrylsäure oder Methacrylsäure mit Methacrylamid, Acrylnitril, Methacrylnitril, Vinylacetat, Maleinsäureanhydrid, Diisobuten, Ethylacrylat und/oder -methacrylat oder aus Gemischen dieser Polymeren besteht.

5. Mischung nach Ansprüchen 1 bis 4, dadurch gekennzeichnet, dass die die Komponente A bildenden Polymerisate zu wenigstens 80 Gew.-%, vorzugsweise zu wenigstens 90 Gew.-% aus Acrylamid und/oder Methacrylamid, 0 bis 5 Gew.-% Acrylnitril, Methacrylnitril Vinylacetat, Maleinsäure, Diisobuten und (Meth)-Acrylsäureestern von einwertigen primären Alkoholen mit 1 bis 4 C-Atomen und aus 5 bis 20 Gew.-% Acrylsäure und/oder Methacrylsäure bestehen.

6. Mischung nach Ansprüchen 1 bis 5, dadurch gekennzeichnet, dass die 2 %ige wässrige Lösung der Komponente A bei 20 °C eine Viskosität zwischen 5 und 100 mPa$\cdot$s, vorzugsweise zwischen 20 und 70 mPa $\cdot$ s hat.

7. Mischung nach Ansprüchen 1 bis 6, dadurch gekennzeichnet, dass die Polymerisation der Monomeren zu den Polymerisaten der Komponente A bei pH-Werten unter 7 erfolgt.

8. Mischung nach Ansprüchen 1 bis 7, dadurch gekennzeichnet, dass Komponente B ein vollverseifter, bevorzugt verstärkter Harzleim ist, der ausgehend von Naturharzkolophonium, bevorzugt Tallölkolophonium, gewonnen worden ist.

9. Mischung nach Ansprüchen 1 bis 7, dadurch gekennzeichnet, dass Komponente C ein teilverseifter, bevorzugt verstärkter Harzleim ist, der ausgehend von Naturharzkolophonium, bevorzugt Tallölkolophonium, gewonnen worden ist.

10. Mischung nach Ansprüchen 1 bis 9, dadurch gekennzeichnet, dass sie aus 3 bis 50 Gew.-% Komponente A und 50 bis 97 Gew.-% Komponente B oder C, bezogen auf Trockensubstanz der Komponenten, besteht.

11. Mischung nach Ansprüchen 1 bis 10, dadurch gekennzeichnet, dass die flüssige Mischung als weitere Bestandteile Konservierungsmittel, Farbstoffe, Geruchsstoffe, Feuchthaltemittel sowie Schutzkolloide enthält.

12. Leimungsmittel, insbesondere für Papier und Karton, enthaltend eine Mischung nach Ansprüchen 1-11.

13. Verwendung der Mischungen nach Ansprüchen 1 bis 11 als Masseleimungsmittel bei der Papier- und Kartonherstellung.

**Claims**

1. A mixture of
   a) at least one synthetic anionic water-soluble polymers, containing at least 80 %-wt acrylamide and/or methacrylamide (component A),
   b) at least one sizing agent based on a totally saponified naturel resin (component B) and/or
   c) at least one sizing agent based on a partially saponified natural resin (component C).

2. A mixture according to claim 1, characterized in that component A is used totally or in part as a water-soluble salt.

3. A mixture according to claim 2, characterized in that the salts are alkali- and/or ammonium salts.

4. A mixture according to claims 1 to 3, characterized in that component A consists of a partly saponified polyacrylamide, partly saponified methacrylamide, of a copolymer of acrylic acid or methacrylic acid with methacrylamide, acrylonitrile, methacrylonitrile, vinyl acetate, maleic acid anhydride, diisobutene, ethylacrylate and/or methacrylate or of mixtures of these polymers.

5. A mixture according to claims 1 to 4, characterized in that the polymers that form component A consist of at least 80%-wt., preferably of at least 90%-wt. of acrylamide and/or methacrylamide, 0 to 5 %-wt. acrylonitrile, methacrylonitrile, vinylacetate, maleic acid, diisobutene and (meth-)acrylic acid esters of monovalent primary alcohols with 1 to 4 C-atoms and of 5 to 20 %-wt. acrylic and/or methacrylic acid.

6. A mixture according to claims 1 to 5, characterized in that the 2 % aqueous solution of component A has a viscosity of between 5 and 100 mPa.s, preferably between 20 and 70 mPa.s at 20 °C.

7. A mixture according to claims 1 to 6, characterized in that the polymerisation of the monomers to the polymers of component A takes place at pH values of less than 7.

8. A mixture according to claims 1 to 7, characterized in that component B is a totally saponified, preferably enriched resin size extracted by starting from naturel resin colophony, preferably tall oil colophony.

9. A mixture according to claims 1 to 7, characterized in that component C is a partly saponified, preferably enriched resin size extracted by starting from natural resin colophony preferably tall oil colophony.

10. A mixture according to claims 1 to 9, characterized in that it consists of 3 to 50 %-wt. of component A and 50 to 97 %-wt. of component B or C, relative to the dry substance of the components.

11. A mixture according to claims 1 to 10, characterized in that the liquid mixture contains preservatives, colouring agents, odourants, moisteners and protective colloids as additional components.

12. A sizing medium, particularly for paper and cardboard, containing a mixture as in claims 1 to 11.

13. Use of the mixtures according to claims 1 to 11, as beater sizing agents for the paper and cardboard production.


**Revendications**

1. Mélange composé de :

a) au moins un polymère anionique synthétique hydrosoluble, contenant au moins 80 % en poids d'amide acrylique et(ou) d'amide méthacrylique (composante A),

b) au moins un agent d'encollage à base d'une résine naturelle entièrement saponifiée (composante B)
et(ou)

c) au moins un agent d'encollage à base d'une résine naturelle partiellement saponifiée (composante C).

2. Mélange suivant la revendication 1, caractérisé en ce que la composante A est entièrement ou partiellement sous forme de sel hydrosoluble.

3. Mélange suivant la revendication 2, caractérisé en ce que les sels sont des sels de métaux alcalins et (ou) d'ammonium.

4. Mélange suivant les revendications 1 à 3, caractérisé en ce que la composante A est constituée d'un polyacrylamide partiellement saponifié, d'un méthacrylamide partiellement saponifié, d'un copolymère de l'acide acrylique ou de l'acide méthacrylique et d'amide méthacrylique, d'acrylo-nitrile, de méthacrylo-nitrile, d'acétate de vinyle, d'anhydride maléique, de diisobutène, d'acrylate d'éthyle et (ou) de méthacrylate d'éthyle ou de mélanges de ces polymères.

5. Mélange suivant les revendications 1 à 4, caractérisé en ce que les polymères constituant la composante A sont formés à raison d'au moins 80 %et de préférence d'au moins 90 % en poids d'amide acrylique et (ou) d'amide méthacrylique et contiennent entre 0 et 5 % en poids d'acrylonitrile, de méthacrylonitrile, d'acétate de vinyle, d'acide maléique, de diisobutène et de (méth) acrylates d'alcools primaires monovalents en $C_1$ à $C_4$, ainsi qu'entre 5 et 20 % en poids d'acide acrylique et (ou) d'acide méthacrylique.

6. Mélange suivant les revendications 1 à 5, caractérisé en ce que la solution aqueuse à 2 % de la composante A possède à 20 °C une viscosité comprise entre 5 et 100 mPa.s et de préférence entre 20 et 70 mPa.s.

7. Mélange suivant les revendications 1 à 6, caractérisé en ce que la polymérisation des monomères en polymères constituant la composante A est réalisée à un pH inférieur à 7.

8. Mélange suivant les revendications 1 à 7, caractérisé en ce que la composante B est une colle de résine entièrement saponifiée et de préférence renforcée, dérivée de résine de colophane naturelle et de préférence de colophane d'huile de pin.

9. Mélange suivant les revendications 1 à 7, caractérisé en ce que la composante C est une colle de résine partiellement saponifiée et de préférence renforcée, dérivée de résine de colophane naturelle et de préférence de colophane d'huile de pin.

10. Mélange suivant les revendications 1 à 9, caractérisé en ce qu'il est formé de 3 à 50 % en poids de composante A et de 50 à 97 % en poids de composante B ou C, ces pourcentages se rapportant à la substance sèche des composantes.

11. Mélange suivant les revendications 1 à 10, caractérisé en ce que la composition liquide contient comme autres constituants des agents de conservation, des colorants, des matières odorantes, des produits humifiants, ainsi que des colloïdes protecteurs.

12. Composition d'encollage, en particulier pour du papier et du carton, contenant un mélange suivant les revendications 1 à 11.

13. Utilisation des mélanges suivant les revendications 1 à 11 comme agents d'encollage dans la masse dans la fabrication de papier et de carton.